# EUROPEAN PATENT SPECIFICATION

(11) **EP 1 846 866 B1**
(45) Date of publication and mention of the grant of the patent: **07.01.2015**
(21) Application number: 06710736.7
(22) Date of filing: 24.01.2006
(51) Int. Cl.: G06F 21/31, G06F 21/34, H04L 9/32

(54) **METHOD, APPARATUS, DEVICE, SYSTEM, PROGRAM, FOR CALIBRATING**
VERFAHREN, VORRICHTUNG, GERÄT, SYSTEM UND PROGRAMM ZUR KALIBRIERUNG
PROCEDE, APPAREIL, DISPOSITIF, SYSTEME ET PROGRAMME D'ETALONNAGE

(30) Priority: 02.02.2005 EP 05100726
(43) Date of publication of application: 24.10.2007
(73) Proprietor: Intrinsic ID B.V., 5656 AE Eindhoven (NL)
(72) Inventor: SKORIC, Boris, NL-5656 AA Eindhoven (NL); TUYLS, Pim, Theo, 2300 Tumhout (BE); AKKERMANS, Antonius, H., M., NL-5656 AA Eindhoven (NL); OPHEY, Willem, G., NL-5656 AA Eindhoven (NL); STALLINGA, Sjoerd, NL-5656 AA Eindhoven (NL)
(74) Representative: DeltaPatents B.V.
(86) International application number: PCT/IB2006/050258
(87) International publication number: WO 2006/082540

(56) References cited:
- US-A1- 2003 204 743
- US-B1- 6 584 214
- RAVIKANTH P S: "Physical One-way Functions" THESIS AT THE MASSACHUSETTS INSTITUTE OF TECHNOLOGY, March 2001 (2001-03), pages 1-154, XP002251679 cited in the application
- SKORIC B ET AL: "Robust Key Extraction from Physical Uncloneable Functions" LECTURE NOTES IN COMPUTER SCIENCE, SPRINGER VERLAG, NEW YORK, NY, US, vol. 3531, June 2005 (2005-06), pages 407-422, XP019010616 ISSN: 0302-9743

## Description

The invention relates to a method for calibrating a device for authenticating a physical token. The invention relates also to an apparatus for calibrating a device for authenticating a physical token. The invention relates also to a computer program product for calibrating a device for authenticating a physical token. The invention relates also to a method for authenticating a physical token at a device using an authentication challenge. The invention relates also to a method for enabling calibrating a device for authenticating a physical token. The invention relates also to a system, a device and a verifier that apply said method for calibrating.

The use of physical tokens for the purpose of identification, authentication and generation of encryption/decryption keys is known in the art. A token can be embedded in e.g. a smart card and used in secure transactions. Before issuing such a card to a user, the token is enrolled in the so-called "enrolment phase" by being subjected to one or more challenges. The challenges and the corresponding responses are stored together with information identifying the token, possibly along with other data, so as to form the "enrolment data". When the smart card is used by the user, in the so-called "authentication phase" the identity of the token is verified by challenging the token with one or more of the stored challenges corresponding to the information identifying the token. If the response or responses obtained are the same as the response or responses stored in the enrolment data, the identification is successful. In some protocols, this challenge-response procedure also results in a shared secret that is derived from the responses by some processing that converts the physical output of a token to a bit string. The shared secret can then be used as a session key for secure transactions between two parties.

There are many examples of physical tokens: planar fiber distributions (as e.g. referenced in the proceedings of the IEEE ISIT conference 2004, p173), in principle all biometrics like fingerprints, iris scan, earprints, and in particular Physical Uncloneable Functions (PUFs). By "physical token" we denote, in general, a physical object that is probed by means other than memory access, and the response depends on the physical structure of the object. The direct, unprocessed response of the physical token can be either analog or digital. The response can be processed to obtain a digital bit string. In contrast, a digital token consists of a digital memory having stored a response for a given set of challenges, e.g. a bit string that has been written into it at every address.

PUFs are also known as Physical Random Functions or Physical One-Way Functions. US Patent Application 2003/0204743 describes the use of devices with unique measurable characteristics together with a measurement module for authentication purposes. Another method of authentication based on 3D structures, probing, and comparison is described in the US patent 6,584,214. In general, PUFs are physical tokens that are extremely hard to clone, where "cloning" can be either (i) producing a physical copy, or (ii) creating a computer model that mimics the behavior. PUFs are complex physical systems comprising many randomly distributed components. When probed with suitable challenges, the complex physics governing the interaction between the PUF and the challenge, e.g. multiple scattering of waves in a disordered medium, leads to a random-looking output, or response, for each separate challenge. The complex small-scale structure of the PUF makes it hard to produce a physical copy, while the complexity of the physical interactions defies computer modeling.

For example, a so-called optical PUF could comprise an optical medium containing many randomly distributed scatterers. A challenge could be an incident beam, and the response is then the consequent speckle pattern detected on a detector. The pattern of bright and dark spots can be converted to a bit string.

A problem with all physical tokens, in contrast to digital tokens, is that the responses are susceptible to noise and perturbations, causing differences between the enrolment phase and the authentication phase. The measurement noise can have many causes, e.g. token/detector misalignment, or environmental effects like temperature, moisture and vibrations. Due to the noise, the bit string that is extracted from a response may contain errors.

Most cryptographic protocols require that the bit string obtained during the authentication phase is exactly equal to the one obtained during the enrolment phase. For example, if the bit string is used as an encryption key, one bit flip in the key will yield an unrecognizable, useless result.

Several methods of calibration are known in the art to at least partially remedy the issues described above.

In one method, the alignment is to be guaranteed by mounting the physical token in a very rigid construction with passive positioning means like a notch or a spring-driven ball and hole. The construction is relatively heavy and big.

Another method, for optical PUFs only, is described in the non-prepublished patent application 04104035 (PHNL040912EPP). The optical PUF is put into a "reader" where challenges may be applied to it in order to verify its identity. For this, the angle of incidence of a probing laser beam must be set within an accuracy to a predetermined angle of incidence, to reproducibly obtain the same output to a given input. In addition, there is a need for a certain accuracy for the exact position of the PUF in the reader. The better the actual position and orientation of the PUF meets the predetermined values, the less the probability that the PUF will be identified wrongly due to a deviant speckle pattern. The method relies on the token having an alignment area with a predetermined spatial structure that is capable of producing at least three separate beams in response to an incident beam. A drawback of this method is that it requires the additional step of creating the alignment area in manufacturing identifiers with a PUF. Another drawback is that it only solves the problem of alignment, but other perturbations like a changing temperature may still cause a failure to authenticate a PUF. A further drawback is that the method is mostly suitable for optical PUFs only.

Another method is the use of error-correcting codes, capable of detecting and correcting a number of bit errors equal to a certain percentage of the total bit string length. However, the use of such a code puts a burden on the process of bit string extraction, growing with the number of errors that can be corrected. Another drawback of error-correcting codes is the fact that they do nothing to eliminate the noise source, i.e. they can extract only as much information as the signal-to-noise ratio allows.

Another method is the use of response reliability information, also known in the art as "helper data" or side information. In general, the response reliability information consists of extra information, stored together with corresponding challenge and response, by means of which the robustness of the bit string extraction process can be improved. For example, the response reliability information may consist of pointers to reliable portions of the response in its analog or digitized form, i.e. those portions that seem unlikely to be affected by noise. During authentication, the response reliability information is used to select certain portions of the physical output as ingredients for the bit string extraction process, or to give more weight to some portions than to others or to disregard non reliable portions.

A drawback of the method with helper data is that it does not eliminate the noise source, i.e. only as much information may be extracted as the signal-to-noise ratio allows.

Another drawback of the response reliability information method is that the assignment of the predicate "reliability" only reflects the enrolment phase. At that moment, the properties of the noise that will occur during authentication are not known. In many applications, the response data is obtained on a different testing station during enrolment than during authentication. Each testing station has its own particular perturbations and misalignments. Furthermore, in many applications of tokens, such as smart cards, there is a multitude of testing stations to choose from during authentication, so that it is impossible to anticipate the characteristics of a testing station that the user is going to use. Finally, also the environmental effects as mentioned above give rise to noise, and therefore the reliability of the data can change from one measurement to the next even on the same testing station.

Hence, there is still a substantial probability that bits which are labeled as reliable during enrolment actually get flipped during authentication, resulting in a failure to authenticate the physical token, or in a failure to generate a common shared secret between the two parties.

Further, the number of stored challenge response pairs collected during enrolment is limited, The pairs may therefore be considered a scarce resource, particularly because a challenge response pair is only to be used once for proper authentication, to avoid replay attacks.

It is therefore an object of the invention to provide a method of calibrating a device for authenticating a physical token that is less sensitive to perturbations like misalignment, device specific distortions or errors, environmental changes and so on.

To address the above issues and according to the invention, the object is achieved by a method as claimed in claim 1. By calibrating the device for authenticating the physical token with a challenge-response pair, many perturbing factors are taken into account, resulting in a relatively low sensitivity for perturbations. An additional advantage is that a single challenge response pair may be used many times over for calibrating, such that the risk of exhausting the pairs stored during enrolment is mitigated.

The device may be a conventional device for probing the physical token and receiving a response from the physical token. The device may alternatively be adapted for the invention.

The device may just be a relatively 'dumb' reader, and depend on a remote verifier for the actual computations for the response, the matching and the signaling. The device may however also comprise a verifier and have the authentication challenge-response pairs that are used for authenticating, stored in a local memory. The device may further also play a role during enrolment in storing the pairs in the memory.

The physical token may be a conventional physical token, but alternatively it may be adapted for the invention, e.g. by having a memory for storing calibration data. The physical token provides a response when probed with a challenge. It may be necessary to couple the physical token to the device in advance of the probing and the responding, but alternatively, the device and the physical token may be integrated into a single component.

The calibration challenge may be dedicated for calibrating and e.g. read from an identifier comprising the physical token, but also a conventional challenge may be used. The calibration challenge may be provided to the device by a verifier, but the calibration challenge may also be stored in the device or along with the physical token.

As known in the art, the response and the response retrieved may, prior to the matching, be subject to a further processing step, like a normalization step, a conversion into a bit string, a Gabor transform, applying helper data and so on. The matching may be performed twice, e.g. at a first and a second resolution, to determine a degree of perturbation.

Signaling that the device is calibrated in case of a match may e.g. be achieved by the device transmitting a signal to a remote verifier, or by the device requesting an end-user to re-insert the physical token or an identifier comprising the physical token.

The calibration result may have a nominal scale, an ordinal scale, a relative scale, an absolute scale, or a still other scale. The nominal scale may for example have two values: "ok" in case of a match and "not ok" in case of no match. More information is obtained from the calibrating if the scale is more enhanced, such that a following attempt to calibrate the device has higher probability to result in a match.

The invention is based on the insight that a challenge response pair may be used for calibrating the device. Because the response of the physical token correlates to the challenge in a way that is extremely complex and very hard to clone, it is counter-intuitive to use the pair for calibrating, and it is surprising that calibrating the device may be achieved.

In an advantageous embodiment, the method has the features of claim 4. By repeating the steps of claim 1 with the parameter modified, the chances of a successful calibration increase. The parameter may pertain to the calibration challenge, for example a position, a tilt, an angle, a wavelength, a spot size, and so on, or it may pertain to an environment setting like a temperature, a humidity, a pressure, a stress and so on. The parameter influences the calibrating by affecting the probabilities of a match. The parameter may be derived from the calibration challenge.

In an advantageous embodiment, the method has the features of claim 5. By setting the parameter to the target value derived from the calibrating, the probability for a successful calibration may be further increased. The parameter may additionally be partially derived from the calibration challenge. If the calibration is repeated several times, the target may be set in dependence of a history of the calibration results and optionally the calibration challenges. This may provide for a faster convergence, such that less repetitions are required before achieving calibration. The target may be a difference with respect to the current setting or challenge. This has the advantage that an offset error may be substantially reduced with a single repetition.

In an advantageous embodiment, the method has the features of claim 6. This may still further increase the probability of a successful calibration. Particularly, speckle patterns change gradually if the perturbations are within a confined range. E.g. a spatial offset may therefore be derived from the correlating.

In an advantageous embodiment, the method has the features of claim 7. The plurality may be thought of as a map of responses. By selecting the closest match, the current position on the map is determined. The current position is caused by the perturbations and deviations from the target position during enrolment that is also marked on the map. The map thus provides for determining an offset or a path from the current position to the target position, where calibration will likely be succesful. The comparing may comprise calculating a measure or the magnitude of an error.

In an advantageous embodiment, the method has the features of claim 8. Because the calibration challenge response pair used for calibrating need not be kept secret, the pair may be conveniently stored along with the physical token. If, for example, the physical token is embedded in a smart card with a memory, the reader may be equipped to retrieve the pair from the memory. The pair may have been stored in the memory at enrolment. Also, the card may carry an identification such that the device may distinguish cards based on determining the identification of the card. The device may then retrieve the pair based on the identification determined.

In an advantageous embodiment, the method has the features of claim 9. Particularly modifying a resolution may serve to speed up the calibration, because fewer repetitions may be required if the calibration starts with a coarse resolution and if the resolution is subsequently refined with the repetitions. Modifying the resolution may also improve the accuracy of the calibrating. This offers the advantage that the challenge density may be increased, leding to more available challenges from the same physical token. For optical PUF's, modifying the spot size of an incident beam provides for a convenient way to modify the resolution.

Because the calibration challenge used for calibrating is different from the authentication challenge used for authenticating, a small risk of a perturbation remains due to the fact that the device has to move from its calibration challenge settings to the authentication challenge settings. By selecting a calibration challenge for calibrating that is close to the challenge for authenticating, the remaining risk of a perturbation is further reduced.

The method of calibrating allows for a method of authenticating according to claim 8, where no challenge response pairs are wasted on attempting to authenticate an e.g. misaligned physical token, by comprising the calibrating according to claim 1, and by only attempting the authentication if signaling that the device is calibrated.

The method of calibrating may be used in a method of enabling calibrating the device for authenticating a physical token according to claim 11, where the calibrating is enabled, typically during enrolment, by storing a calibration challenge generated and a response obtained for retrieval for the calibrating. It is noted that also conventional pairs may be used for the invention, but that the conventional enrolment typically stores the pairs in a secret and tamper-proof memory, which is not required for the pairs for calibrating. Particularly, the pairs for calibrating may be stored in the plain and open, e.g. in a memory of a smart card embedding the physical token, or in a publicly accessible database, such that each device may use it as required. The enabling may be repeated, yielding the plurality of pairs of claim 10. The enabling may also be repeated with a parameter modified, possibly similar to claim 4, to obtain the plurality of responses of claim 7.

The method of claim 1 may be executed by, inter alia, an apparatus, a device, a verifier, or a system in accordance with the invention. Because the functionality in accordance with the invention may be implemented at either of these entities or be distributed over these entities, advantageous embodiments of the apparatus, the device, the verifier, the system, and the token according to the present invention substantially correspond to the embodiments of the method and have the same advantages for the same reasons.

Further, the invention also relates to a computer readable medium having stored thereon instructions for causing one or more processing units to execute the method according to the present invention.

These and other aspects of the invention will be apparent from and elucidated with reference to the illustrative embodiments shown in the drawings, in which:
Fig. 1 schematically illustrates the method 100 for calibration in accordance with the invention.
Figs. 2 and 3 schematically illustrate the method 200 for authentication in accordance with the invention.
Fig. 4 schematically illustrates the method 301 for enabling calibration in accordance with the invention.
Fig. 5 schematically illustrates the apparatus 401 for calibrating in accordance with the invention.
Fig. 6 schematically illustrates the device 501 and the verifier 601 for authenticating in accordance with the invention.
Fig. 7 schematically illustrates the system 701 for authenticating in accordance with the invention.
Fig. 8 schematically illustrates the enrolment phase 301 for enabling calibrating in accordance with the invention.
Fig. 9 schematically illustrates an embodiment of the authentication phase 200 for authenticating in accordance with the invention, wherein the device 501 does the matching.
Fig. 10 schematically illustrates another embodiment of the authentication phase 200 for authenticating in accordance with the invention, wherein the verifier 601 does the matching.

Throughout the figures, same reference numerals indicate similar or corresponding features. Some of the features indicated in the drawings are typically implemented in software, and as such represent software entities, such as software modules or objects.

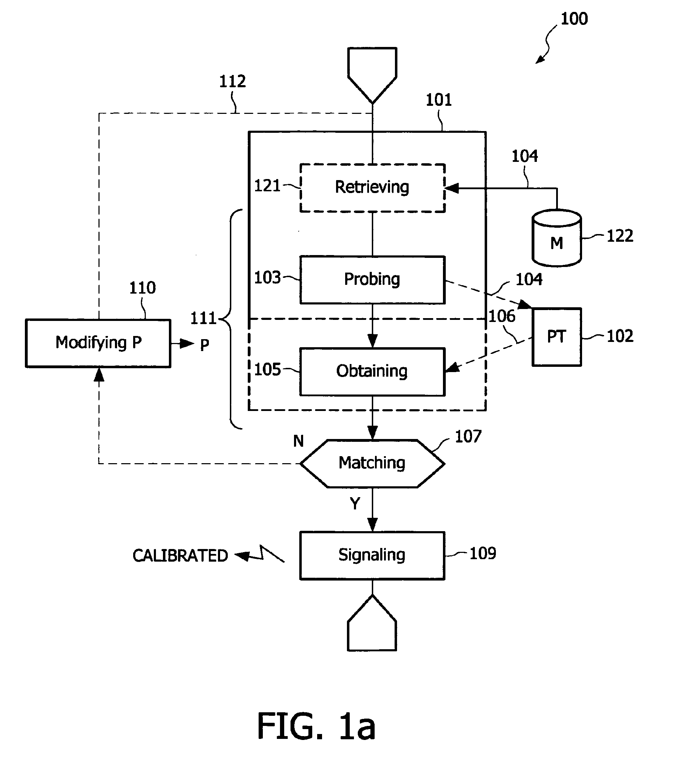

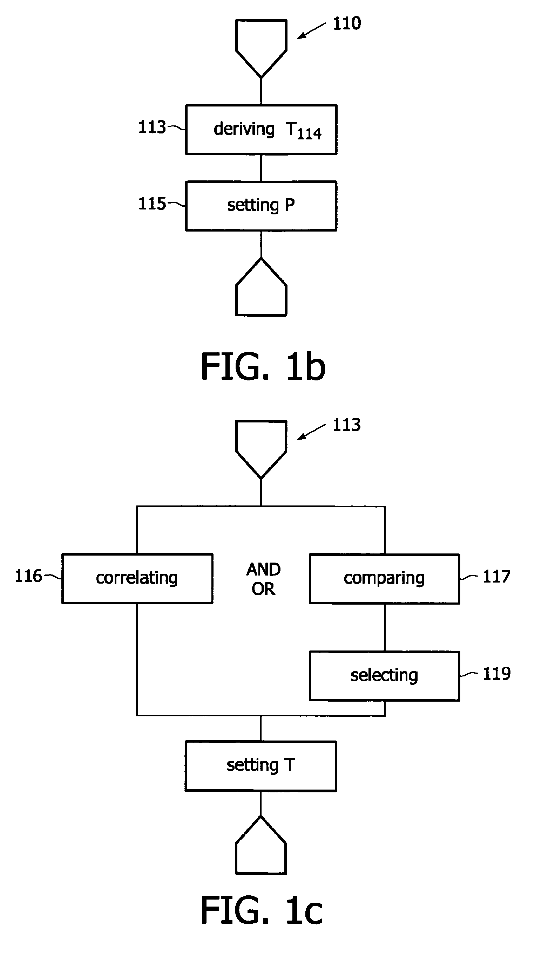

The invention relates to authentication methods 100 and protocols in which an identifier with a Physical Uncloneable Function (PUF) 102 is used, see Figure 1, in which Figure la shows the method 100 for calibrating with some optional steps like modifying 110 and retrieving 121, and Figures 1b and 1c show optional additional steps refining the modifying 110 and the deriving 113 respectively.

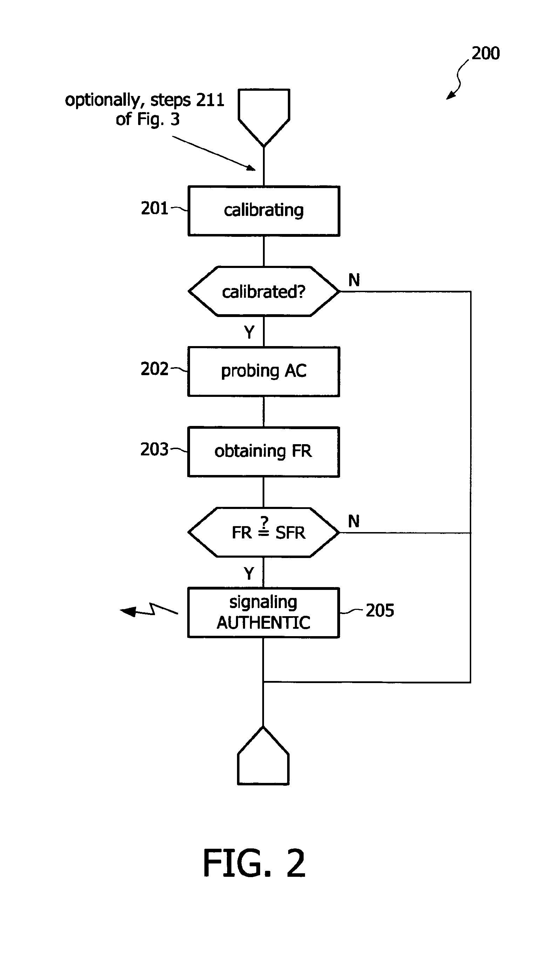

The owner of a PUF authenticates himself by producing the correct response to an authentication challenge, see Figure 2, steps 202, 203, 205. A problem arises due to the inherent noisiness of response measurements. A method 100 is proposed for calibrating 201 the measurement device 101. A special, non-secret Challenge-Response Pair (CRP) 104, 108 is reserved for the purpose of correctly configuring the device 101.

The use of 'Physically Unclonable Functions' (PUFs) for security purposes is a known concept. Incorporating a PUF into an identifier such as a smartcard, chip, storage medium etc. makes it extremely difficult to produce a 'clone' of the identifier. 'Clone' means either a physical copy of the identifier that includes the physical token, or a model that is capable of predicting the output behaviour of the identifier with a certain reliability. The difficulty of physical copying arises because manufacturing the PUF is an uncontrolled process and the PUF is a highly complex object. Accurate modelling is hard because of the PUF's complexity; slightly varying the input results in widely diverging outputs.

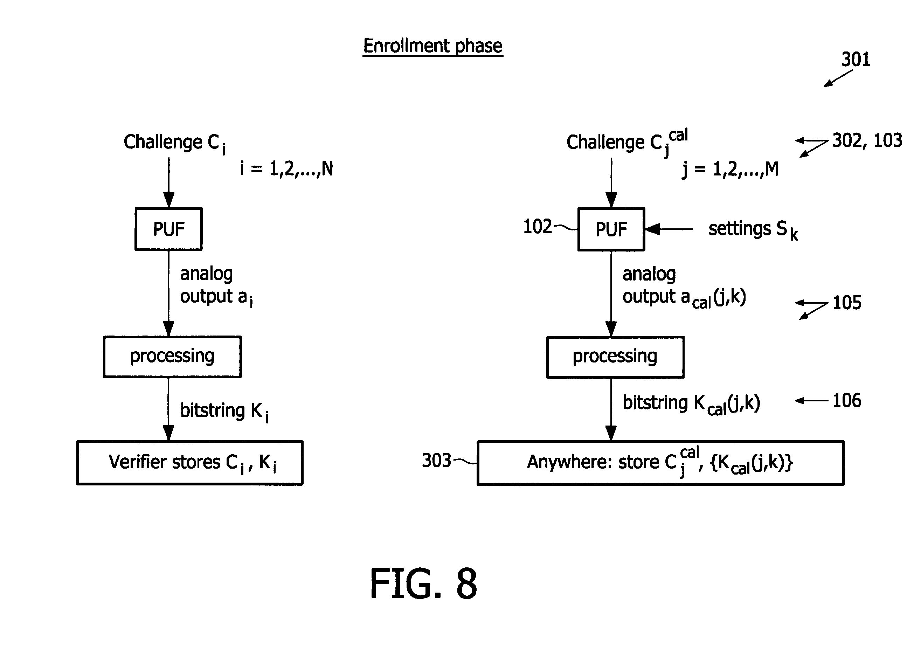

The uniqueness and complexity of PUFs make them well suited for identication or authentication purposes. Usage of PUFs typically includes:
- an identifier containing a PUF,
- a method of feeding an authentication challenge input into a PUF and extracting the response,
- an enrollment phase, see Figure 8 left half, during which the verifier stores a small number of Challenge-Response Pairs (CRPs) in his database
- an authentication phase, during which the owner of the identifier authenticates himself to the verifier.

The authentication protocol relies on the uniqueness of the CRPs. The response of the identifier is checked against the PUF response stored by the verifier during the enrollment. If the responses match, the verifier is convinced of the device's identity.

A PUF is called 'strong' if it yields unique, unpredictable responses to many different challenges.

Known types of PUF include:
- Optical PUFs. These consist of a piece of e.g. epoxy containing scattering particles.
   Shining a laser through it produces a speckle pattern which strongly depends on the properties of the incoming wave front, see R. Pappu, PhD thesis, MIT 2001, Physical One-Way Functions, R. Pappu et al., Science Vol. 297, Sept 2002, p.2026, Physical One-Way Functions, and S. Feng at al., Phys. Rev. Lett. Vol.61, Nr.7, p.834 (1988), Correlations and Fluctuations of Coherent Wave Transmission through Disordered Media. The input can be varied by shifting or tilting the laser beam. Alternatively, it was described in R. Pappu, PhD thesis, MIT 2001, Physical One-Way Functions, how the wave front is changed by selecting 'pixels' out of the beam by means of selective blocking, e.g. with micromirrors (DMDs) or a liquid crystal.
- Silicon PUFs. Here the production spread of circuit components is used to obtain unique properties of chips. One measures e.g. output delays resulting in response to certain (overclocked) input patterns, see B.L.P. Gassend et al., "Silicon Physical Unknown Functions", Proc. 9th ACM Conf. on Computer and Communications Security, Nov. 2002.
- Acoustic PUFs. Here the acoustic properties of a token are used.
- Coating PUFs. Here the electric properties (capacitance/impedance) of a chip coating are used.

A 'strong' PUF supports many CRPs. Its output depends on the incoming challenge so strongly that it becomes especially important to make sure that the correct challenge is fed to the PUF. If the laser beam is e.g. shifted or tilted too much with respect to the 'ideal' geometry that was used during the enrollment phase, an incorrect response is produced by the PUF, even if there is nothing wrong with the PUF. The same problem arises if e.g. the wavelength of the laser differs from the wavelength used during enrollment.

A challenge essentially consists of a description of the "settings" 111 that were used during a CRP measurement during the enrollment phase. Ideally, this description should be suffcient to ensure correct positioning of the PUF 102 and the reader 101 in the authentication phase. However, in reality there are many disturbances that can cause incorrect alignment, e.g. deformation of the identifier in which the PUF is embedded, wear and tear of the reader, small differences between readers, etc. In addition, the wavelength may vary, e.g. due to fluctuations in laser temperature and current or because of spread inherent to the lasers.

These disturbances can be either random or systematic. If a disturbance occurs randomly, there is a reasonable probability that repetition of the measurement will yield the correct response.

A problem is how to find a calibration mechanism compensating for substantially all disturbances, so that the settings during authentication are near to perfect.

Consequences of the calibration problem include some ensuing problems.

It is noted that a CRP should never be used for authentication more than once. If the verifier uses a challenge more than once and an eavesdropper was active the first time that particular challenge was sent, it is possible that the eavesdropper has learned the correct response and hence can impersonate the PUF the second time.

We also remark that, as storage of speckle patterns requires a significant amount of space, the verifier stores only a limited set of CRPs during enrollment. CRPs may be refreshed at a later stage, e.g. after a successful authentication by the identifier.

Calibration errors lead to an increased rate of failure of the authentication protocol. When the protocol is started again, a new CRP has to be used.

This means that calibration errors lead to quicker exhaustion of the set of stored CRPs in the verifier's database.

Summarising, perturbations like alignment and wavelength mismatches can give the following problems:
- Increased probability that authentication fails, leading to user irritation.
- When authentication fails, the user does not know whether it happens due to alignment/wavelength errors or because there is something wrong with his PUF. He does not know whether he should take action and obtain a new PUF.
- The authentication protocol must be run more than once, leading to increased waiting time.
- Refreshment of stored CRPs has to occur more often, leading to increased waiting time.
- In the worst case, the complete set of stored CRPs is used up before the PUF has had a chance to successfully authenticate itself. This situation is fatal for the system.

The concept of using "helper data" is known. During enrollment, some general properties (helper data) of each response are stored together with that response. During the authentication protocol, this helper data is sent along with the challenge in order to aid the measurement process. This method has the following properties:
- helper data belongs to a CRP and is therefore never reused
- helper data must not reveal too much about a response

In accordance with the invention, special calibration data 104, 108 is created during enrollment 301, which data 104, 108 are later used 100, 201 to reproduce the settings 111, e.g. align the measurement device 101 before an authentication challenge is provided.

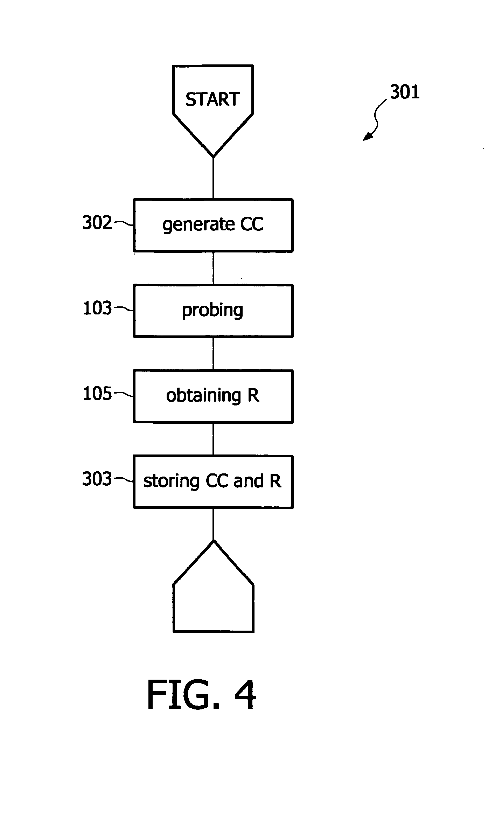

During enrollment 301, see Figure 4 and Figure 8 right half, the following steps take place:
- The verifier chooses 302 one or more random challenges 104. These challenges will never be used for the authentication protocol, but only for calibration purposes.
- These calibration challenges 104 may be stored 303 in the identifier containing the PUF 102 or in the verifier's database.
- By slightly varying the settings around the 'perfect' value, and examining the response 106, the verifier determines which features of a speckle pattern are robust under disturbances.
- Some or all of these robust features are stored 303. They may be stored in the identifier or in the verifiers database, or a combination of both, as the storage capacity of the identifier is likely to be limited. Along with the robust features, labels may be stored indicating the measure of robustness of features. Additionally or alternatively, response features 118 may be stored belonging to non-ideal settings 111 of the measurement device 101.

Just prior to authentication 202-205, or during the authentication protocol, the following calibration steps take place:
- The reader 101 receives 121 one or more calibration challenges 104 from the identifier 122 and/or from the verifier 601, accompanied by the robust features 108.
- The reader 101 tries 112 to align the PUF 102, the laser and other pieces of the device 101 such that response 106 measurements 105 indeed yield the robust features 107, 109.

If a measure of robustness is included in the calibration data 104, 108, the reader 101 searches 110 for features in decreasing order of robustness. If response features of non-ideal settings 111 are included, the reader 101 can use this data to determine 113 in which direction it needs to make adjustments 114, 115 in order to achieve perfect settings 111.
- If the robust features cannot be observed, the reader 101 may produce an error message. The verifier will not send an authentication challenge if an error message is generated by the reader.

It is noted that differences between the invention and the helper data method include:
- The calibration CRPs may be reused many times;
- There is nothing secret about the calibration CRPs. The 'features' included in the calibration data are allowed to reveal unlimited information about a response; and
- In some embodiments, part of the calibration data may be stored by the prover.This is not done in the case of helper data.

It is further noted that:
- The calibration data preferably does not necessarily consist of complete speckle patterns, for this would lead to more storage and transmission requirements.
- Calibration CRPs do not have to be treated confidentially. Attackers are allowed to know calibration CRPs. This is in sharp contrast to the absolute condentiality of the verifier's CRP database used for authentication.
- If calibration data are stored on the identifier, the calibration process is faster and requires less communication with the verifier. On the other hand, if the storage capacity of the identifier is severely limited (e.g. for cost reasons), it is better to store the calibration data in the verifier's database.
- An advantage of the invention is that the verifier's database of CRPs is not exhausted quickly, since a challenge is sent only if calibration has succeeded.
- Another advantage of the invention is that the user can see the difference between a failure during calibration and a failure during real authentication. On the other hand, failure during calibration can still mean many things. However, successful passing of the calibration step is a strong indication that the PUF is in good order.
- Note that the invention can be used in combination with the helper data method.

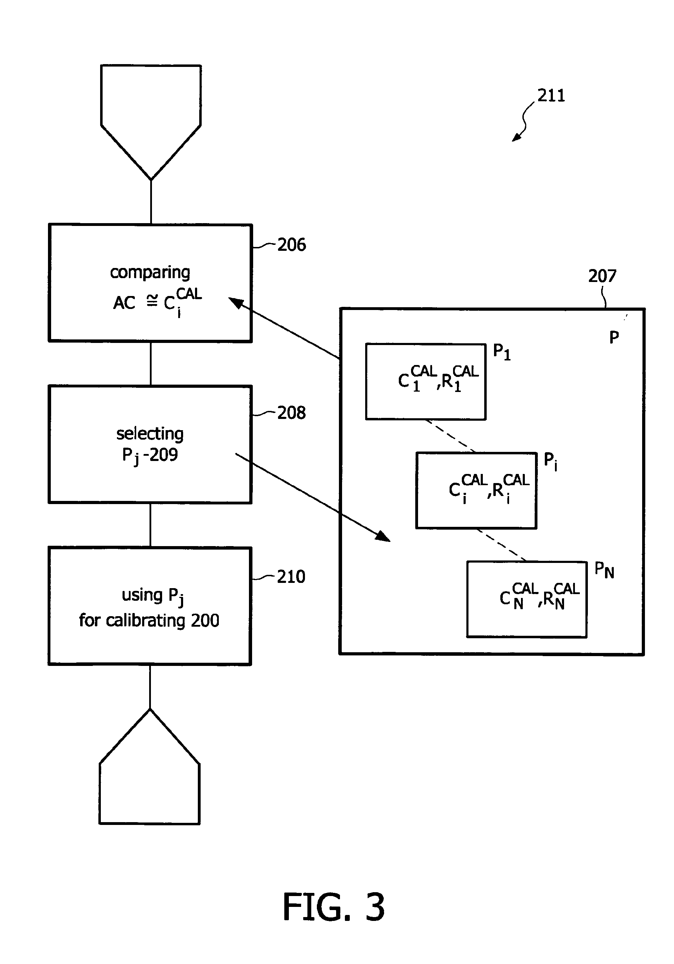

In one embodiment, the verifier stores 301 calibration data 104, 108. As indicated in Figure 3, e.g. the verifier may optionally first randomly pick an authentication challenge from a CRP database and then choose 208 from a calibration database 207 that calibration challenge 209 that is closest 206 to the picked authentication challenge, and use 210 it subsequently for calibrating 200 the device 101. This procedure increases the probability of correct alignment.

In another embodiment, we may have to accept that not all readers can perfectly control e.g. their laser wavelength and will not be able to achieve the nominal wavelength. In this case multiple versions of all CRPs may be stored 303 in a memory 122, e.g. a separate version for each wavelength interval in a set of wavelength intervals.

An identifier may thus contain a PUF 102, where the PUF is subjected to measurements 103, 105 during an enrollment phase, and calibration data are stored during the enrollment phase.

The identifier may comprise a memory 122, where the calibration data is stored 303.

The calibration data 104, 108 may be stored in a database 122 of the verifier.

The calibration data may be partly stored on the identifier and partly in a database of the verifier. Alternatively, the calibration data may be stored, partially or as a whole, in a third party database, that may be available to the public.

The invention leads to the following protocols:
A protocol in which a measurement result 106 is compared 107 to calibration data 108.
A protocol in which the alignment of the measuring device 101 relative to the identifier is adjusted 110 such that a measurement lies close to an authentication challenge.
A protocol in which the verifier 601 sends a calibration challenge 104.
A protocol in which the verifier sends partial information about the response 106 to a calibration challenge 104.
A protocol in which the verifier 601 chooses a calibration challenge 104 that resembles the authentication challenge, see Figure 3.

### Enrollment Phase

As shown in Figure 8, the enrollment phase comprises two parts: one dealing with authentication on the left and one dealing with calibration on the right.

During the part of the enrollment phase dealing with authentication, the PUF 102 is subjected to a set of authentication challenges Cᵢ, with i=1,2,...N. During this process the correct alignment parameters 111 are used. The PUF's response to a challenge Cᵢ is an analog output aᵢ. The analog output aᵢ is converted to a digital bit-string. Further digital processing (e.g. error correction and/or cryptographic operations) yields a bit-string Kᵢ. The Verifier stores the set {Cᵢ, Kᵢ}, i=1,...,N for authentication purposes.

During the part of the enrollment phase dealing with calibration 301, the PUF 102 is subjected to a set of calibration challenges 104 Cⱼ^{cal}, j=1,...,M. For each challenge 104 Cⱼ^{cal}, different alignment parameters 111 sₖ, k=1,...,P are applied and the analog PUF responses a_{cal}(j, k) are measured, which depend on the challenge 104 as well as the alignment parameters 111. The analog output a_{cal}(j, k) is converted to a digital bit-string 106. Further digital processing (e.g. error correction and/or cryptographic operations) 105 yields a bit-string K_{cal}(j, k). The set 118 {Cⱼ^{cal}, K_{cal}(j, k)}, j=1,...,M, k=1,...,P, called "calibration data", is stored for calibration purposes. The calibration data can be stored anywhere. One example is a database kept by the Verifier. Another example is a data carrier attached to the PUF. Yet another example is a publicly accessible online database.

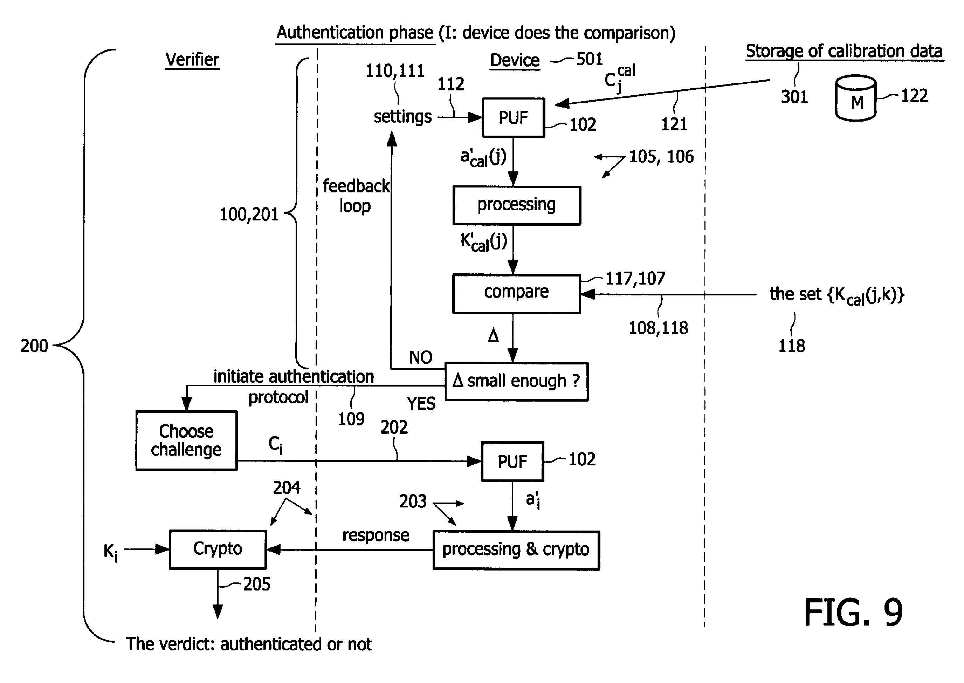

### Authentication I, Figures 9

The device 101 acquires a calibration challenge Cⱼ^{cal} 104 from the set of calibration data. The device applies alignment parameters 111 that are best to its knowledge. The device 101 challenges 103 the PUF 102 with Cⱼ^{cal} 104. The PUF's analog output a'_{cal}(j) is converted 105 to a digital bit-string. Further digital processing 105 (e.g. error correction and/or cryptographic operations) yields a bit-string K'_{cal}(j). The device 101 accesses, from the calibration data, the responses 108 {K_{cal}(j,k)}, which pertain to calibration challenge Cⱼ^{cal}. The device 101 compares 107, 117 the bit-string K'_{cal}(j) to the bit-strings K_{cal}(j,k). Based on this comparison, the device estimates 119, 120 the difference Δ between the correct alignment parameters and the current alignment parameters. If the difference Δ is larger than a pre-determined threshold value, then the device adjusts 110 its alignment parameters 111 by an amount Δ 114 and repeats 112 the previous steps. If the difference Δ is not larger than the pre-determined threshold value, then the device sends 109 a message to the Verifier, initiating the second step 202-205 of the protocol.

The Verifier selects an authentication challenge Cᵢ from his database and sends it to the device. The device 101 subjects 202 the PUF 102 to the authentication challenge Cᵢ. The analog response a'ᵢ is measured 203 and converted 203 to a digital bit-string. Further processing 203 of this bit-string (possibly depending on further input from the Verifier) yields a response string. In particular, this response string could comprise an encryption of a random number received from the Verifier. The device sends the response string to the Verifier. The Verifier accesses the bit-string Kᵢ from his database and processes 204 the response string in combination with Kᵢ. (In particular, this processing step could comprise encrypting a random number with Kᵢ and comparing the result to the response string). Based on this processing step 204, the Verifier decides 205 if the PUF 102 is authentic or not.

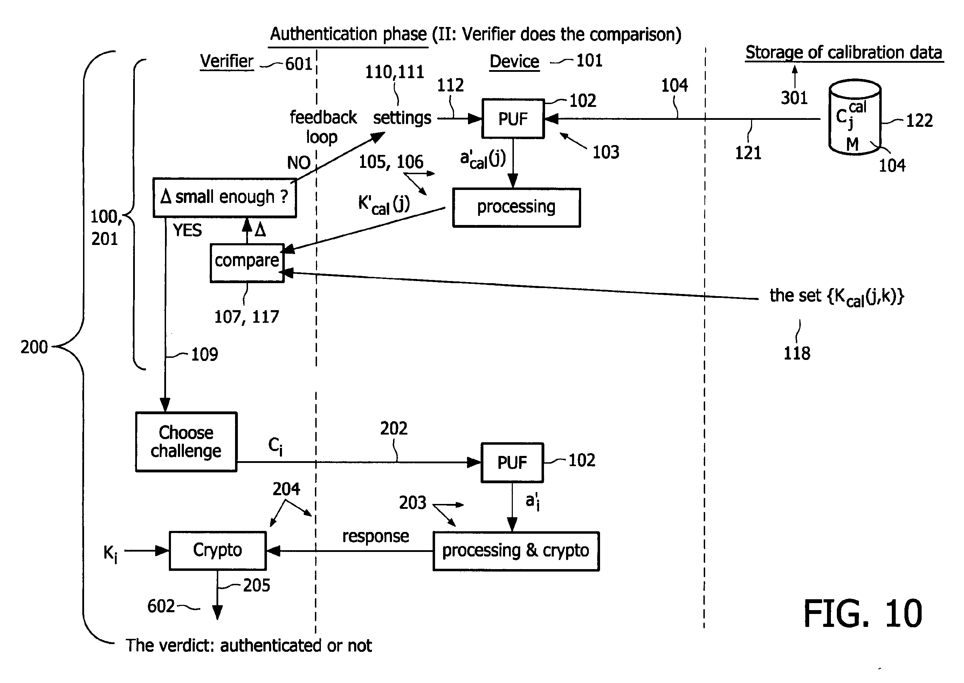

### Authentication II, Figure 10

The device 101 acquires 121 a calibration challenge Cⱼ^{cal} 104 from the set of calibration data 104, 108. The device 101 applies alignment parameters 111 that are best to its knowledge. The device challenges 103 the PUF with Cⱼ^{cal} 104. The device converts 105 the PUF's analog output a'_{cal}(j) to a digital bit-string. Further digital processing (e.g. error correction and/or cryptographic operations) yields a bit-string K'_{cal}(j). The device sends K'_{cal}(j) to the Verifier. The Verifier accesses, from the calibration data, the responses {K_{cal}(j,k)}, which pertain to calibration challenge Cⱼ^{cal}. The Verifier compares 107 the bit-string K'_{cal}(j) 106 to the bit-strings K_{cal}(j,k) 108. Based on this comparison, the Verifier estimates the difference Δ 114 between the correct alignment parameters and the current alignment parameters 111. If the difference Δ is larger than a pre-determined threshold value, then the Verifier sends Δ to the device. The device 101 then adjusts 110 its alignment parameters 111 by an amount Δ 114 and repeats 112 the previous steps. If the difference Δ is not larger than the pre-determined threshold value, then the Verifier commences the second step 202-205 of the protocol.

The Verifier selects an authentication challenge Cᵢ from his database and sends it to the device 101. The device subjects 202 the PUF 102 to the challenge Cᵢ. The analog response a'ᵢ is measured 203 and converted 203 to a digital bit-string. Further processing of this bit-string (possibly depending on further input from the Verifier) yields a response string 106. In particular, this response string could comprise an encryption of a random number received from the Verifier. The device sends the response string to the Verifier. The Verifier accesses the bit-string Kᵢ from his database and processes 204 the response string in combination with Kᵢ. (In particular, this processing step could comprise encrypting a random number with Kᵢ and comparing the result to the response string). Based on this processing step 204, the Verifier decides 205 if the PUF 102 is authentic or not.

### Correlating, Figure 1

The step of correlating 116 a newly obtained PUF 102 response 106 to stored calibration data 108 can be implemented in many ways. The stored calibration data can correspond to any of the processing stages between the analog PUF output and the final, error-corrected bit-string.

In one example, an A/D converted version of the analog output is directly used. In the case of an optical PUF, this A/D conversion yields a 2D bitmap image, and a correlation between two bitmaps is computed using well-known image processing techniques such as Fourier transforms and inner products. For PUFs in general, the A/D conversion yields a bit-string, and a correlation between two bit-strings is computed using standard concepts such as Hamming Distance and Edit Distance.

In another example, processing such as filtering or error correction is applied to the A/D converted output before correlation takes place. Again, possible ways of computing a correlation between responses involve 2D image correlation, Hamming Distance and Edit Distance.

In yet another example, a cryptographic key is derived from the PUF response before correlation takes place. In this case, Hamming Distance and Edit Distance provide a measure of correlation between two keys.

In a further example, an encrypted value is derived from the PUF response before correlation takes place. In this case, only a "binary" measure of correlation exists between two encrypted values, namely equality vs. non-equality of bit-strings.

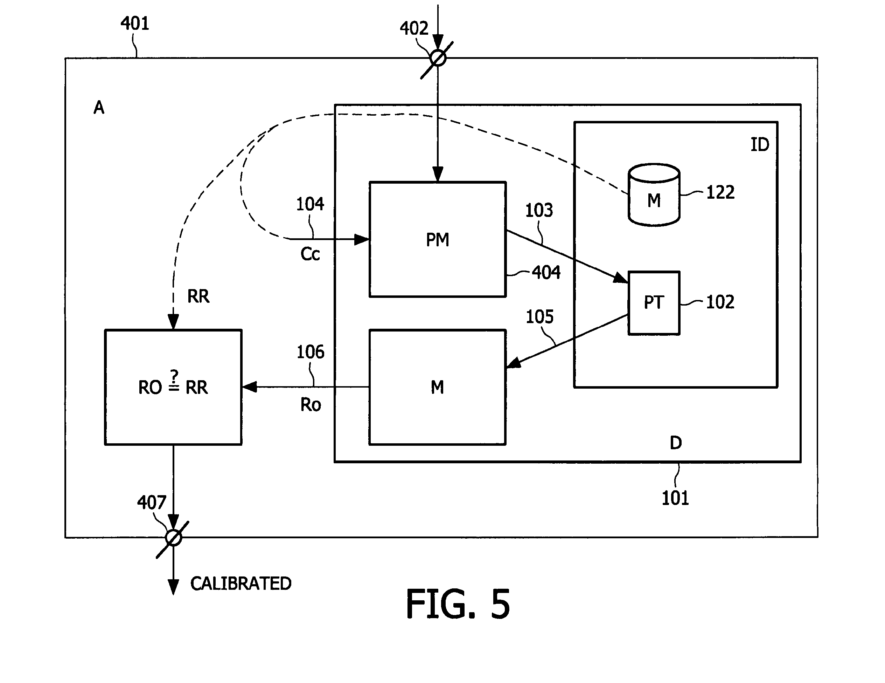

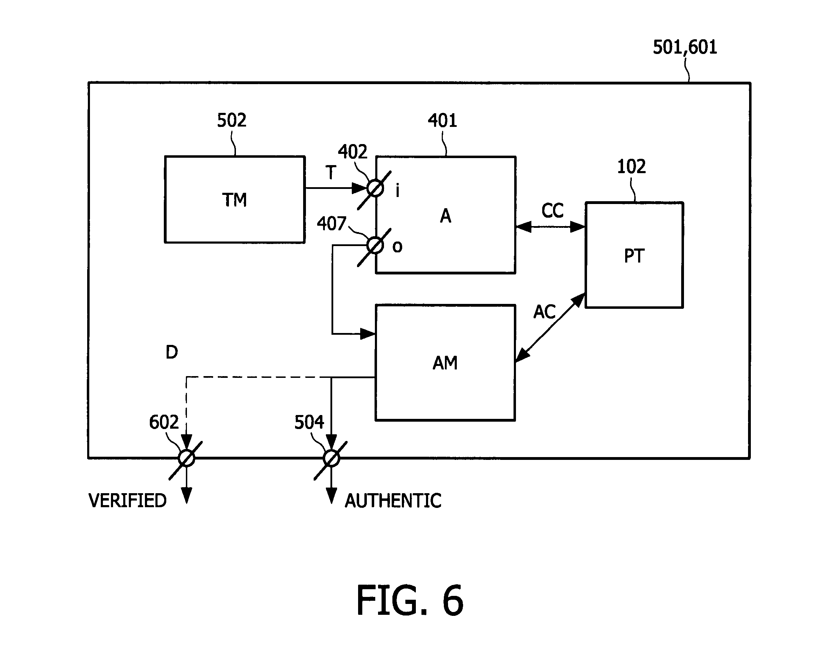

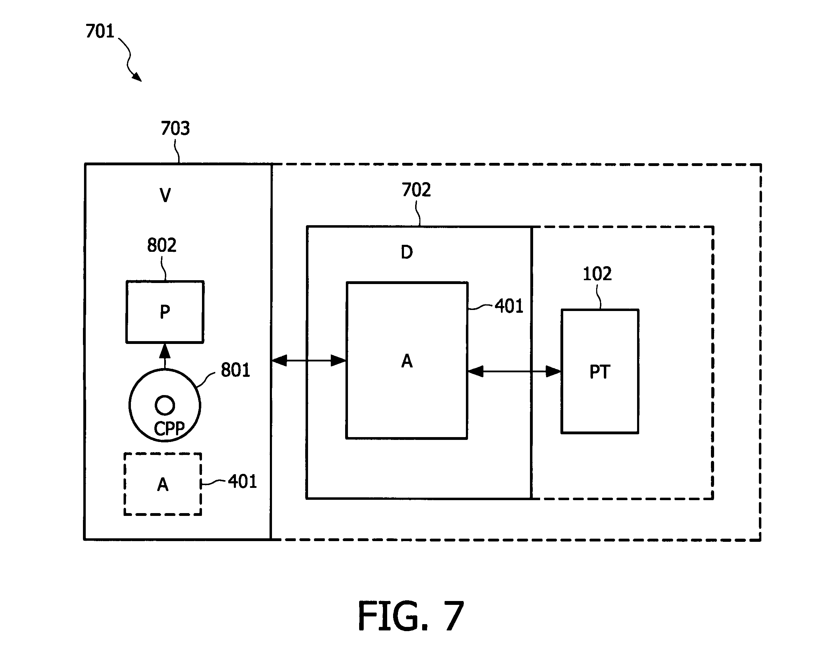

Figures 5-7 show embodiments of products in accordance with the invention. It is noted that the functionality of the apparatus may be distributed over identifier, reader, verifier. The claims are aimed at the adapted products, where the calibrating takes place or where calibration is initiated.

In a typical use of the method, the authentication takes place with the physical token at a device, but the previous enrolment took place at a further device. Concatenating all the steps for such a scenario, the use may be summed up as: a method for authenticating a physical token at a device using an authentication challenge, with the steps:
enabling calibrating the device, comprising:
   - generating a calibration challenge for the calibrating,
   - a further device probing the physical token with the calibration challenge generated,
   - obtaining a response from the physical token at the further device,
   - storing the calibration challenge generated and the response obtained for retrieval,
enabling authenticating the physical token at the device, comprising:
   - generating an authentication challenge for the authenticating,
   - the further device probing the physical token with the authentication challenge generated,
   - obtaining a further response from the physical token at the further device,
   - securely storing the authentication challenge generated and the further response obtained for retrieval during the authenticating,
   - moving the physical token from the further device to the device,
   - calibrating the device, comprising:
   - probing the physical token at the device with the calibration challenge,
   - obtaining a still further response from the physical token,
   - retrieving the response,
   - matching the still further response obtained against the response retrieved,
   - signaling that the device is calibrated only in case of a match,
authenticating the physical token at the device using the authentication challenge, comprising:
   - only if signaling that the device is calibrated:
   - probing the physical token with the authentication challenge,
   - obtaining a further response from the physical token,
   - matching the further response obtained against a stored further response,
   - signaling the authenticity of the physical token only in case of a match.

The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A method (100) for calibrating a device (101) for authenticating a physical token (102), responses of the physical token (102) being susceptible to noise and perturbations,
the method comprising:
- the device (101) probing (103) the physical token (102) with a calibration challenge (104),
- obtaining (105) a response (106) from the physical token (102),
- retrieving a retrieved response (108), the retrieved response (108) having been obtained from the physical token (102) by probing it with the calibration challenge (104),
- matching (107) the response obtained (106) against the retrieved response (108)
- only if the response obtained (106) matches against the retrieved response (108):
- probing (202) the physical token (102) with an authentication challenge, the authentication challenge being different from the calibration challenge (104),
- obtaining (203) a further response from the physical token (102).

2. A method according to claim 1 comprising signaling (109) that the device (101) is calibrated in case the response obtained (106) matches against the retrieved response (108).

3. A method (100) as in Claim 1 or 2 further comprising if the response obtained (106) matches against the retrieved response (108):
- matching (204) the further response obtained against a stored further response, and
- signaling (205) the authenticity of the physical token (102) in case of a match.

4. A method according to claim 1, the method further comprising:
- modifying (110), if the matching failed, a parameter (111) that influences the calibrating,
- repeating (112) the steps of claim 1 with the parameter (111) modified.

5. A method according to claim 4, the method further comprising:
- deriving (113), from the calibrating, a target value (114) for the parameter (111), and
- modifying (110) the parameter (111) by setting (115) it to the target value (114).

6. A method according to claim 5, the method further comprising:
- correlating (116) the response obtained (106) with the retrieved response (108) for determining correlations, and
- setting (115) the target value (114) in dependence of the correlations for increasing the correlation determined after the repeating.

7. A method according to claim 5, the method further comprising:
- comparing (117) the response obtained (106) to each response in a plurality (118) of response-target pairs, and
- selecting (119) a pair (120) out of the plurality, the pair having a response that compares most to the response obtained (106), and
- setting (115) the target value (114) equal to the target of the pair selected.

8. A method according to claim 1, the method further comprising:
- retrieving (121), previously to the calibrating, the calibration challenge (104) and the retrieved response (108) from a memory (122) associated with the physical token (102).

9. A method according to claim 4, the method further comprising:
- modifying (110) at least one out of the set of an angle, a position, a wavelength, a spot size, a spot shape, a resolution, a temperature, a force, a pressure, a stress, a distortion, a pixel.

10. A method according to claim 3, the method further comprising:
- comparing (206) the authentication challenge to each challenge in a plurality (207) of challenge-response pairs, and
- selecting (208) a pair (209) out of the plurality, the pair having a calibration challenge (104) that compares most to the authentication challenge, and
- using (210) the calibration challenge (104) and the response of the pair selected for the calibrating.

11. A method for calibrating (301) a device (101) for authenticating a physical token (102), the method comprising an enrollment phase and an authentication phase, the enrollment phase comprising:
- generating (302) a calibration challenge (104) for the calibrating,
- probing (103) the physical token (102) with the calibration challenge (104),
- obtaining a response from the physical token (102), and
- storing (303) the calibration challenge (104) generated and the response obtained (106) for retrieval for the calibrating (100),
and the authentication phase comprising a method according to any of claims 1 to 10.

12. An apparatus (401) for calibrating a device (101) for authenticating a physical token (102), responses of the physical token (102) being susceptible to noise and perturbations, the apparatus being configured for using a method according to any of claims 1 to 10, the apparatus comprising:
- an input (402) for receiving a trigger for starting the calibrating,
- probing means (404) for probing (103) the physical token (102) with a calibration challenge (104),
- means for obtaining the response from the physical token (102),
- matching means for matching the response obtained (106) against a retrieved response (108), the apparatus being configured for retrieving the retrieved response (108), the retrieved response (108) having been obtained from the physical token (102) by probing it with the calibration challenge (104),
the apparatus being configured for, only if the response obtained (106) matches against the retrieved response (108): probing (202) the physical token (102) with an authentication challenge, the authentication challenge being different from the calibration challenge (104), obtaining (203) a further response from the physical token (102).

13. An apparatus (401) as in Claim 12 comprising an output (407) for signaling (109) that the device (101) is calibrated, the apparatus being arranged for, in response to receiving the trigger at the input (402), signalling (109) on the output (407) that the device (101) is calibrated in case of a match.

14. A device (501) for authenticating a physical token (102) using an authentication challenge, the device (501) comprising:
- an apparatus (401) for calibrating the device (501) according to claim 13,
- triggering means (502) for providing a trigger at the input of the apparatus,
- authenticating means (503) for authenticating the physical token (102) with the authentication challenge,
- a further output (504) for signaling the authenticity of the physical token (102),
the device (501) being arranged for:
- triggering the apparatus (401), and
- only if the apparatus (401) signaling (109) that the device (501) is calibrated:
- authenticating the physical token (102) with the authentication challenge,
- signaling the authenticity of the physical token (102) on the further output in dependence of the authenticating.

15. A system (701) for authenticating a physical token (102) at a device (702), the system comprising:
- an apparatus (401) according to claim 13 for calibrating the device (702),
- a device (702) for probing (103) the physical token (102) with a calibration challenge (104) and obtaining a response,
- a verifier (703) for matching the response obtained (106) against a retrieved response (108), the system arranged such that the verifier provides an authentication challenge to the device only if the apparatus (401) signaled (109) that the device (101) is calibrated.

16. A computer program product (801) for, when being executed on a processor (802), calibrating a device (101) for authenticating a physical token (102), the computer program product being arranged for causing the processor to perform the steps of claim 1

## Patentansprüche

1. Ein Verfahren (100) zum Kalibrieren einer Vorrichtung (101) zum Authentifizieren eines physischen Tokens (102), wobei Antworten des physischen Tokens (102) anfällig für Geräusch und Störungen sind,
wobei das Verfahren Folgendes umfasst:
- die Vorrichtung (101), die das physische Token (102) mit einer Kalibrierungs-Challenge (104) prüft (103),
- Erhalt (105) einer Antwort (106) vom physischen Token (102),
- Abruf einer abgerufenen Antwort (108), wobei die abgerufene Antwort (108) von einem physischen Token (102) durch dessen Prüfung mit der Kalibrierungs-Challenge (104) erhalten wurde,
- Anpassung (107) der erhaltenen Antwort (106) an die abgerufene Antwort (108)
- nur, wenn die erhaltenen Antwort (106) zur abgerufenen Antwort (108) passt:
- Prüfung (202) des physischen Tokens (102) mit einer Authentifizierungs-Challenge, wobei die Authentifizierungs-Challenge verschieden von der Kalibrierungs-Challenge (104) ist,
- Erhalt (203) einer weiteren Antwort (106) vom physischen Token (102).

2. Ein Verfahren nach Anspruch 1, umfassend die Signalisierung (109), dass die Vorrichtung (101) für den Fall kalibriert wird, dass die erhaltene Antwort (106) zur abgerufenen Antwort (108) passt.

3. Ein Verfahren (100) nach Anspruch 1 oder 2, weiter umfassend, wenn die erhaltenen Antwort (106) zur abgerufenen Antwort (108) passt:
- Anpassung (204) der weiteren erhaltenen Antwort an eine gespeicherte weitere Antwort; und
- Signalisierung (205) der Authentizität des physischen Tokens (102) für den Fall einer Übereinstimmung.

4. Ein Verfahren nach Anspruch 1, wobei das Verfahren weiter Folgendes umfasst:
- Veränderung (110), wenn die Anpassung fehlgeschlagen ist, eines Parameters (111), der die Kalibrierung beeinflusst,
- Wiederholung (112) der Schritte von Anspruch 1 mit dem geänderten Parameter (111).

5. EinVerfahren nach Anspruch 4, wobei das Verfahren weiter Folgendes umfasst:
- Ableitung (113) von der Kalibrierung eines Zielwerts (114) für den Parameter (111), und
- Änderung (110) des Parameters (111) durch seine Einstellung (115) auf den Zielwert (114).

6. Ein Verfahren nach Anspruch 5, wobei das Verfahren weiter Folgendes umfasst:
- Korrelation (116) der erhaltenen Antwort (106) mit der abgerufenen Antwort (108), um Korrelationen zu bestimmen, und
- Einstellung (115) des Zielwerts (114) in Abhängigkeit von den Korrelationen, um die Korrelation zu erhöhen, die nach der Wiederholung bestimmt wurden.

7. Ein Verfahren nach Anspruch 5, wobei das Verfahren weiter Folgendes umfasst:
- Vergleich (117) der erhaltenen Antwort (106) mit jeder Antwort in einer Vielzahl (118) von Antwort-Ziel-Paaren, und
- Auswahl (119) eines Paars (120) aus der Vielzahl, wobei das Paar eine Antwort aufweist, die am besten mit der erhaltenen Antwort (106) vergleichbar ist; und
- Einstellung (115) des Zielwerts (114) gleich dem Ziel des ausgewählten Paars.

8. Ein Verfahren nach Anspruch 1, wobei das Verfahren weiter Folgendes umfasst:
- Abruf (121), vor der Kalibrierung, der Kalibrierungs-Challenge (104) und der abgerufenen Antwort (108) von einem Speicher (122), der mit dem physischen Token (102) assoziiert ist.

9. Ein Verfahren nach Anspruch 4, wobei das Verfahren weiter Folgendes umfasst:
- Änderung (110) mindestens eines von der Einstellung eines Winkel, einer Position, einer Wellenlänge, einer Punktgröße, einer Punktform, einer Auflösung, einer Temperatur, einer Kraft, eines Drucks, einer Spannung, einer Verzerrung, eines Pixels.

10. Ein Verfahren nach Anspruch 3, wobei das Verfahren weiter Folgendes umfasst:
- Vergleich (206) der Authentifizierungs-Challenge mit jeder Challenge in einer Vielzahl (207) von Challenge-Antwort-Paaren, und
- Auswahl eines Paars (208) aus der Vielzahl, wobei das Paar eine Kalibrierungs-Challenge (104) aufweist, die am meisten mit der Authentifizierungs-Challenge vergleichbar ist, und
- Verwendung (210) der Kalibrierungs-Challenge (104) und der Antwort des Paars, das für die Kalibrierung ausgewählt ist.

11. Ein Verfahren zum Kalibrieren (301) einer Vorrichtung (101) zum Authentifizieren eines physischen Tokens (102), wobei das Verfahren eine Eintragungsphase und eine Authentifizierungsphase umfasst, wobei die Eintragungsphase Folgendes umfasst:
- Erzeugung (302) einer Kalibrierungs-Challenge (104) zum Kalibrieren
- Prüfung (103) des physischen Tokens (102) mit der Kalibrierungs-Challenge (104),
- Erhalt einer Antwort vom physischen Token (102), und
- Speicherung (303) der erzeugten Kalibrierungs-Challenge (104) und der erhaltenen Antwort (106) zum Abruf für die Kalibrierung (100),
und wobei die Authentifizierungsphase ein Verfahren nach einem der Ansprüche 1 bis 10 umfasst.

12. Ein Gerät (401) zum Kalibrieren einer Vorrichtung (101) zum Authentifizieren eines physischen Tokens (102), wobei Antworten des physischen Tokens (102) anfällig für Geräusch und Störungen sind, wobei das Gerät konfiguriert ist, um ein Verfahren nach einem der Ansprüche 1 bis 10 zu verwenden, wobei das Gerät Folgendes umfasst:
- einen Input (402) zum Empfang einer Auslösung zum Start der Kalibrierung,
- Prüfungsmittel (404) zur Prüfung (103) des physischen Tokens (102) mit einer Kalibrierungs-Challenge (104)
- Mittel zum Erhalt der Antwort vom physischen Token (102),
- Anpassungsmittel zum Anpassen der erhaltenen Antwort (106) an die abgerufene Antwort (108) wobei das Gerät konfiguriert ist, um die abgerufene Antwort (108) abzurufen, wobei die abgerufene Antwort (108) von einem physischen Token (102) durch dessen Prüfung mit der Kalibrierungs-Challenge (104) erhalten wurde,
wobei das Gerät konfiguriert ist, um, nur wenn die erhaltenen Antwort (106) mit der abgerufenen Antwort (108) übereinstimmt: Prüfung (202) des physischen Tokens (102) mit einer Authentifizierungs-Challenge, wobei die Authentifizierungs-Challenge verschieden von der Kalibrierungs-Challenge (104) ist, Erhalt (203) einer weiteren Antwort vom physischen Token (102).

13. Ein Gerät (401) nach Anspruch 12, umfassend einen Output (407), um zu signalisieren (109), dass die Vorrichtung (101) kalibriert ist, wobei das Gerät angeordnet ist um, in Antwort auf den Erhalt der Auslösung am Input (402) auf dem Output (109) zu signalisieren (109), dass die Vorrichtung (101) für den Fall einer Übereinstimmung kalibriert ist.

14. Eine Vorrichtung (501) zum Authentifizieren eines physischen Tokens (102) unter Verwendung einer Authentifizierungs-Challenge, wobei die Vorrichtung (501) Folgendes umfasst:
- ein Gerät (401) zur Kalibrierung der Vorrichtung (501) nach Anspruch 13,
- Auslösemittel (502), um eine Auslösung am Input des Geräts bereitzustellen,
- Authentifizierungsmittel (503) zur Authentifizierung des physischen Tokens (102) mit der Authentifizierungs-Challenge
- einen weiteren Output (504) zur Signalisierung der Authentizität des physischen Tokens (102), wobei die Vorrichtung (501) angeordnet ist, um:
- das Gerät auszulösen (401), und
- nur wenn das Gerät (401) signalisiert (109), dass die Vorrichtung (501) kalibriert ist,
- Authentifizierung des physischen Tokens (102) mit der Authentifizierungs-Challenge
- Signalisierung der Authentizität des physischen Tokens (102) auf dem weiteren Output in Abhängigkeit von der Authentifizierung.

15. Ein System (701) zum Authentifizieren eines physischen Tokens (102) an einer Vorrichtung (702), wobei das System Folgendes umfasst:
- ein Gerät (401) nach Anspruch 13 zur Kalibrierung der Vorrichtung (702),
- eine Vorrichtung (702) zur Überprüfung des physische Tokens (102) mit einer Kalibrierungs-Challenge (104) und erhalte einer Antwort,
- einen Überprüfer (703) zum Anpassen der erhaltenen Antwort (106) an eine abgerufene Antwort (108), wobei das System derart angeordnet ist, dass der Überprüfer eine Authentifizierung nur bereitstellt, wenn das Gerät (401) signalisiert (109), dass die Vorrichtung (101) kalibriert ist.

16. Ein Computerprogrammprodukt (801) um, wenn es auf einem Prozessor (802) ausgeführt wird, eine Vorrichtung (101) zu kalibrieren, um ein physisches Token (102) zu authentifizieren, wobei das Computerprogrammprodukt angeordnet ist, um zu verursachen, dass der Prozessor die Schritte von Anspruch 1 durchführt.

## Revendications

1. Un procédé (100) pour étalonner un dispositif (101) pour authentifier un jeton physique (102), des réponses du jeton physique (102) étant sensibles au bruit et à des perturbations, le procédé comprenant :
- le dispositif (101) vérifiant (103) le jeton physique (102) avec une demande d'étalonnage (104),
- l'obtention (105) d'une réponse (106) à partir du jeton physique (102),
- la récupération d'une réponse récupérée (108), la réponse récupérée (108) ayant été obtenue à partir du jeton physique (102) en la vérifiant avec la demande d'étalonnage (104),
- la comparaison (107) de la réponse obtenue (106) à la réponse récupérée (108),
- seulement si la réponse obtenue (106) est comparable à la réponse récupérée (108) :
- la vérification (202) du jeton physique (102) avec une demande d'authentification, la demande d'authentification étant différente de la demande d'étalonnage (104),
- l'obtention (203) d'une réponse supplémentaire à partir du jeton physique (102).

2. Un procédé selon la revendication 1, comprenant le signal (109) que le dispositif (101) est étalonné au cas où la réponse obtenue (106) est comparable à la réponse récupérée (108).

3. Un procédé (100) selon la revendication 1 ou 2, comprenant en outre, si la réponse obtenue (106) est comparable à la réponse récupérée (108) :
- la comparaison (204) de la réponse supplémentaire obtenue à une réponse supplémentaire stockée, et
- le signal (205) de l'authenticité du jeton physique (102) en cas de comparabilité.

4. Un procédé selon la revendication 1, le procédé comprenant en outre :
- la modification (110), si la comparaison a échoué, d'un paramètre (111) qui influence l'étalonnage,
- la répétition (112) des étapes de la revendication 1 avec le paramètre (111) modifié.

5. Un procédé selon la revendication 4, le procédé comprenant en outre :
- la dérivation (113), à partir de l'étalonnage, d'une valeur cible (114) pour le paramètre (111), et
- la modification (110) du paramètre (111) en le réglant (115) à la valeur cible (114).

6. Un procédé selon la revendication 5, le procédé comprenant en outre :
- la corrélation (116) de la réponse obtenue (106) avec la réponse récupérée (108) pour déterminer des corrélations, et
- le réglage (115) de la valeur cible (114) en dépendance des corrélations pour augmenter la corrélation déterminée après la répétition.

7. Un procédé selon la revendication 5, le procédé comprenant en outre :
- la comparaison (117) de la réponse obtenue (106) à chaque réponse dans une pluralité (118) de paires réponse-cible, et
- la sélection (119) d'une paire (120) parmi la pluralité, la paire possédant une réponse qui est la plus comparable à la réponse obtenue (106), et
- le réglage (115) de la valeur cible (114) de façon égale à la cible de la paire sélectionnée.

8. Un procédé selon la revendication 1, le procédé comprenant en outre :
- la récupération (121), avant l'étalonnage, de la demande d'étalonnage (104) et de la réponse récupérée (108) à partir d'une mémoire (122) associée avec le jeton physique (102).

9. Un procédé selon la revendication 4, le procédé comprenant en outre :
- la modification (110) d'au moins un parmi le jeu d'un angle, d'une position, d'une longueur d'onde, d'une taille de point, d'une forme de point, d'une résolution, d'une température, d'une force, d'une pression, d'une contrainte, d'une distorsion, d'un pixel.

10. Un procédé selon la revendication 3, le procédé comprenant en outre :
- la comparaison (206) de la demande d'authentification à chaque demande dans une pluralité (207) de paires demande-réponse, et
- la sélection (208) d'une paire (209) parmi la pluralité, la paire possédant une demande d'étalonnage (104) qui est la plus comparable à la demande d'authentification, et
- l'utilisation (210) de la demande d'étalonnage (104) et de la réponse de la paire sélectionnée pour l'étalonnage.

11. Un procédé pour étalonner (301) un dispositif (101) pour authentifier un jeton physique (102), le procédé comprenant une phase d'inscription et une phase d'authentification, la phase d'inscription comprenant :
- la génération (302) d'une demande d'étalonnage (104) pour l'étalonnage,
- la vérification (103) du jeton physique (102) avec la demande d'étalonnage (104),
- l'obtention d'une réponse à partir du jeton physique (102), et
- le stockage (303) de la demande d'étalonnage (104) générée et de la réponse obtenue (106) pour la récupération pour l'étalonnage (100),
et la phase d'authentification comprenant un procédé selon une quelconque des revendications 1 à 10.

12. Un appareil (401) pour étalonner un dispositif (101) pour authentifier un jeton physique (102), des réponses du jeton physique (102) étant sensibles au bruit et à des perturbations, l'appareil étant configuré pour utiliser un procédé selon une quelconque des revendications 1 à 10, l'appareil comprenant :
- une entrée (402) pour recevoir un déclenchement pour commencer l'étalonnage,
- des moyens de vérification (404) pour vérifier (103) le jeton physique (102) avec une demande d'étalonnage (104),
- des moyens pour obtenir la réponse à partir du jeton physique (102),
- des moyens de comparaison pour comparer la réponse obtenue (106) à une réponse récupérée (108), l'appareil étant configuré pour récupérer la réponse récupérée (108), la réponse récupérée (108) ayant été obtenue à partir du jeton physique (102) en la vérifiant avec la demande d'étalonnage (104),
l'appareil étant configuré pour, seulement si la réponse obtenue (106) est comparable à la réponse récupérée (108) : vérifier (202) le jeton physique (102) avec une demande d'authentification, la demande d'authentification étant différente de la demande d'étalonnage (104), obtenir (203) une réponse supplémentaire à partir du jeton physique (102).

13. Un appareil (401) selon la revendication 12, comprenant une sortie (407) pour signaler (109) que le dispositif (101) est étalonné, l'appareil étant agencé pour, en réponse à la réception du déclenchement à l'entrée (402), signaler (109) sur la sortie (407) que le dispositif (101) est étalonné en cas de comparabilité.

14. Un dispositif (501) pour authentifier un jeton physique (102) utilisant une demande d'authentification, le dispositif (501) comprenant :
- un appareil (401) pour étalonner le dispositif (501) selon la revendication 13,
- des moyens de déclenchement (502) pour fournir un déclenchement à l'entrée de l'appareil,
- des moyens d'authentification (503) pour authentifier le jeton physique (102) avec la demande d'authentification,
- une sortie supplémentaire (504) pour signaler l'authenticité du jeton physique (102),
le dispositif (501) étant agencé pour :
- déclencher l'appareil (401), et
- seulement si l'appareil (401) signale (109) que le dispositif (501) est étalonné :
- authentifier le jeton physique (102) avec la demande d'authentification,
- signaler l'authenticité du jeton physique (102) sur la sortie supplémentaire en dépendance de l'authentification.

15. Un système (701) pour authentifier un jeton physique (102) dans un dispositif (702), le système comprenant :
- un appareil (401) selon la revendication 13 pour étalonner le dispositif (702),
- un dispositif (702) pour vérifier (103) le jeton physique (102) avec une demande d'étalonnage (104) et obtenir une réponse,
- un vérificateur (703) pour comparer la réponse obtenue (106) à une réponse récupérée (108), le système étant agencé de sorte que le vérificateur fournisse une demande d'authentification au dispositif seulement si l'appareil (401) a signalé (109) que le dispositif (101) est étalonné.

16. Un produit programme d'ordinateur (801) pour, lorsqu'il est exécuté sur un processeur (802), étalonner un dispositif (101) pour authentifier un jeton physique (102), le produit programme d'ordinateur étant agencé pour faire en sorte que le processeur réalise les étapes de la revendication 1.
